# EUROPÄISCHE PATENTSCHRIFT

(11) **EP 3 557 155 B1**
(45) Veröffentlichungstag und Bekanntmachung des Hinweises auf die Patenterteilung: **10.06.2020**
(21) Anmeldenummer: 19168771.4
(22) Anmeldetag: 11.04.2019
(51) Int. Cl.: F24H 3/04, B60H 1/22, F24H 9/18

(54) **ELEKTRISCHE HEIZVORRICHTUNG**
ELECTRIC HEATING DEVICE
DISPOSITIF DE CHAUFFAGE ÉLECTRIQUE

(30) Priorität: 20.04.2018 DE 102018206085
(43) Veröffentlichungstag der Anmeldung: 23.10.2019
(73) Patentinhaber: Eberspächer catem GmbH & Co. KG, 76863 Herxheim (DE)
(72) Erfinder: GSCHWIND, Thomas, 67098 Bad Dürkheim (DE); FISCHER, Waldemar, 76751 Jockgrim (DE)
(74) Vertreter: Grünecker Patent- und Rechtsanwälte PartG mbB

(56) Entgegenhaltungen:
- EP-A1- 1 515 588
- EP-A1- 2 298 582
- EP-A1- 3 273 177

## Beschreibung

Die vorliegende Erfindung betrifft eine elektrische Heizvorrichtung und ein Verfahren zur Herstellung einer solchen.

Eine gattungsgemäße elektrische Heizvorrichtung hat ein offenes Gehäuse, in dem ein Schichtaufbau mit wenigstens einem Radiatorelement, wenigstens einem wärmeabgebenden Element und wenigstens einem PTC-Element sowie wenigstens ein Federelement aufgenommen sind. Als offenes Gehäuse ist üblicherweise ein Gehäuse zu verstehen, welches auf gegenüberliegenden Seiten jeweils Durchtrittsöffnungen für das zu erwärmende Medium freilässt, so dass dieses den in dem Gehäuse eingeschlossenen und gehaltenen Schichtaufbau durchströmen kann. Diese Vorgabe gilt für den gattungsgemäßen Stand der Technik wie auch für die erfindungsgemäße elektrische Heizvorrichtung. Das Federelement ist in dem Gehäuse derart aufgenommen, dass es den Schichtaufbau unter Federvorspannung in dem Gehäuse hält. In dem Gehäuse sind des Weiteren mehrere elektrisch mit dem wenigstens einen PTC-Element verbundenen Kontakte isoliert gehalten. Diese Kontakte sind üblicherweise als Blechbänder ausgebildet und sich in Längsrichtung des Schichtaufbaus als Teil desselben erstreckend vorgesehen. Das Gehäuse ist ein offenes Gehäuse, d.h. bildet sich üblicherweise gegenüberliegende Gehäuseöffnungen aus, zwischen denen der Schichtaufbau vorgesehen ist.

Ein solcher Zuheizer zur Klimatisierung des Innenraums eines Kraftfahrzeuges ist beispielsweise aus der EP-A1-1 564 503 bekannt. Der die Radiatorelemente und die dabei abgebenden Elemente umfassende Schichtaufbau wird üblicherweise auch als Heizblock bezeichnet. Das Federelement befindet sich im Wesentlichen auf Höhe des Heizblocks, d.h. zwischen denen durch die durch den Heizblock gebildete Ober- und Unterseiten desselben, so dass die durch das Federelement bewirkte Federkraft im Wesentlichen mittig in den Heizblock eingeleitet wird.

Der Heizblock der gattungs- und erfindungsgemäßen elektrischen Heizvorrichtung umfasst üblicherweise mehrere parallele Lagen von wärmeabgebenden und wärmeerzeugenden Elementen. Die wärmeerzeugenden Elemente des Heizblocks umfassen üblicherweise mehrere in einer Ebene übereinander vorgesehene PTC-Heizelemente, die zwischen Leiterbahnen, die üblicherweise durch Blechbänder gebildet sind, angeordnet sind. Diese Leiterbahnen sind mit unterschiedlicher Polarität bestromt. Die PTC-Elemente können mit diesen Leiterbahnen verklebt sein. Auch ist es möglich, die Leiterbahnen unter Vorspannung gegen die PTC-Heizelemente anzulegen. In jedem Fall ist darauf zu achten, dass zur Auskupplung der von den PTC-Heizelementen erzeugten Wärme und zur Einkupplung von Strom eine gute Kontaktierung zwischen den Leiterbahnen und den PTC-Heizelementen besteht.

Auch bei der erfindungsgemäßen elektrischen Heizvorrichtung können ein oder mehrere wärmeerzeugende Elemente als Teil des Heizblocks vorgesehen sein. Die von den wärmeerzeugenden Elementen erzeugte Wärme wird über wärmeabgebende Elemente an das zu erwärmende Medium, d.h. die Luft abgegeben. Diese durchströmt das Gehäuse durch die beiden Rahmenöffnungen, die zwischen sich den ebenen Heizblock aufnehmen. Die Rahmenöffnungen liegen dabei üblicherweise parallel zueinander an gegenüberliegenden Seiten eines im Wesentlichen flachen, rahmenförmigen Gehäuses. Im Hinblick auf eine möglichst kostengünstige Herstellung der elektrischen Heizvorrichtung werden die wärmeabgebenden Elemente in der Regel aus mäandrierend gebogenen Blechstreifen gebildet, die Wellrippen ausbilden. Diese Wellrippen liegen ein- oder beidseitig an wärmeabgebenden Elementen an. Dementsprechend umfasst der Heizblock mehrere Lagen von wärmeabgebenden und wärmeerzeugenden Elementen, wobei auch im Hinblick auf die Wärmeauskopplung darauf zu achten ist, dass die wärmeabgebenden Elemente gut an den wärmeerzeugenden Elementen anliegen. Auch hierzu können die wärmeabgebenden Elemente mit den wärmeerzeugenden Elementen fest verbunden und/oder durch wenigstens ein in dem Gehäuse aufgenommenes Federelement unter Vorspannung angelegt werden.

Statt durch ein mäandrierendes Blechband kann das wärmeabgebende Element bei der erfindungsgemäßen elektrischen Heizvorrichtung auch durch ein stranggepresstes Aluminiumprofil gebildet sein, welches Stege ausbildet, die sich im Wesentlichen rechtwinklig zu den Lagen des Schichtaufbaus, umfassend die wärmeabgebenden und die wärmeerzeugenden Elemente erstrecken. In einem solchen Fall kann die Leiterbahn, d.h. die in der Regel ebene Anlagefläche für das PTC-Heizelement durch die Außenfläche eines solchen stranggepressten Aluminiumprofils gebildet werden. Bei beiden Alternativen Wellrippenelement bzw. Strangpressprofil sind die Anlagefläche für die PTC-Heizelemente elektrisch leitend ausgestaltet und elektrisch mit in dem Gehäuse üblicherweise isoliert voneinander gehaltenen Kontakten verbunden. In dem erstgenannten Fall werden die Kontakte in der Regel durch die freiliegenden Enden der Blechbänder gebildet.

Der geschichtete Heizblock aus parallelen wärmeabgebenden und wärmeerzeugenden Elementen, gegebenenfalls unter Hinzufügung eines oder mehrerer sich parallel hierzu erstreckender Federelemente ist vorzugsweise in einem Gehäuse mit einem zumindest U-förmigen Querschnitt gehalten. Bei der Beaufschlagung des Schichtaufbaus mit einer Feder ist der Rahmen so zu dimensionieren, dass die Federkraft dauerhaft auch bei den erhöhten Temperaturen halten kann. Dabei ist zu beachten, dass der isolierende Rahmen heutzutage nicht zuletzt aus ökonomischen Gründen als Kunststoffspritzgussteil hergestellt wird. Übliche Gehäuse bestehen heutzutage aus einem Gehäuseunterteil und einem Gehäuseoberteil. Das Gehäuseunterteil bildet hierbei eine Aufnahme für die einzelnen Elemente des Heizblocks sowie erforderlichenfalls des Federelementes aus. In diesem Gehäuseunterteil werden die einzelnen Elemente des Heizblocks angeordnet. Diese Ausgestaltung kann auch bei der erfindungsgemäßen elektrischen Heizvorrichtung zu bevorzugen sein. Danach wird der Heizblock durch Fügen von Gehäuseoberteil und Gehäuseunterteil in dem Gehäuse eingeschlossen. Hierzu können Ränder, die die Rahmenöffnungen umgeben, den Heizblock teilweise überdecken, so dass der Heizblock zwischen den Rahmenöffnungen eingeschlossen und in dem Gehäuse gehalten ist. Die beiden Gehäuseteile werden danach miteinander verbunden, beispielsweise über eine Rastverbindung.

Des Weiteren soll im Hinblick auf eine kostengünstige Herstellung der elektrischen Heizvorrichtung das Gehäuse selbst möglichst einfach hergestellt werden können. Dabei sind jedoch auch die besonderen Anforderungen zu beachten, die der Einbau von einem oder mehreren Federelementen in das Gehäuse in der Praxis stellt, wenn beim Fügen der Gehäuseteile der Heizblock bereits in dem Rahmen unter Vorspannung gesetzt ist, so dass das Fügen gegen diese Vorspannung zu erfolgen hat.

Mit der EP-A1-1 432 287 ist bereits von der vorliegenden Anmelderin ein Lösungsvorschlag gemacht worden, bei dem sämtliche, den Heizblock bildenden Teile zunächst in das Gehäuse eingesetzt werden. Das Gehäuse dann verschlossen und danach von der Stirnseite des Gehäuses durch einen Kanal ein Federelement eingebracht wird, durch welches die Lagen des Heizblocks unter Vorspannung dieser Feder gegeneinander angelegt werden.

Bei dem aus der EP-A1-1 564 503 bekannten Verfahren zur Herstellung der elektrischen Heizvorrichtung werden die den Heizblock bildenden Elemente in ein Gehäuseteil eingebracht. Des Weiteren wird das Federelement in das Gehäuseteil eingebracht. Danach erfolgt das Schließen des Gehäuses durch Aufbringen eines weiteren Gehäuseteils auf das erste Gehäuseteil. Nach der Lehre der EP-A1-1 564 503 wird erst beim Schließen des Gehäuses das Federelement unter Vorspannung gesetzt, und zwar durch Verdrängerelemente, die an dem weiteren Gehäuseteil angeformt sind und welche das Federelement unter Vorspannung setzen. Dieses Verdrängerelement bildet eine Schrägfläche aus, an welcher das Federelement mit seinem freien oberen Schenkel vorbeigleitet und hierbei in Richtung auf den Heizblock um ein Lager innerhalb des ersten Gehäuseteils verschwenkt und schließlich zur Erzeugung einer Spannkraft vorgespannt wird.

Aus der auf die Anmelderin zurückgehenden EP 2 298 582 A1 ist eine elektrische Heizvorrichtung für ein Kraftfahrzeug bekannt, bei welcher ein Federelement und ein Federgegenelement zusammen mit dem Schichtaufbau in das rahmenförmige Gehäuse eingebracht werden. Das Federgegenelement ist dabei nach Art eines Gitters ausgebildet und weist Aufnahmen für Federzungen des Federelementes auf. In einer Montagausgangslage sind die Federzungen jeweils in den Aufnahmen des Federgegenelements aufgenommen. Nach dem Schließen des Gehäuses wird das Federelement relativ zu dem Federgegenelement verschoben, welches unmittelbar gegen die Schichtaufbau wirkt und durch Herausheben der Federzungen aus den Aufnahmen unter Vorspannung gesetzt wird.

Diese vorbekannten Vorschläge führen zu einer gewissen Erleichterung bei der Montage, da die Lagen des Heizblocks zunächst vorspannungsfrei in das Gehäuse integriert werden. Gleichwohl besteht noch Raum für Verbesserungen.

Der vorliegenden Erfindung liegt das Problem zugrunde, eine elektrische Heizvorrichtung der eingangs genannten Art anzugeben, deren Schichtaufbau leichter in dem Gehäuse montiert werden kann.

Zur Lösung des vorrichtungsmäßigen Aspekts wird mit der vorliegenden Erfindung eine elektrische Heizvorrichtung mit den Merkmalen von Anspruch 1 vorgeschlagen.

Diese unterscheidet sich dadurch von dem gattungsbildenden Stand der Technik, das Federelement verschieblich in dem Gehäuse aufgenommen und mehrere in Verschieberichtung versetzt zueinander vorgesehene Federzungen aufweist, denen durch das Gehäuse ausgebildete Federzungenaufnahmen und benachbart hierzu vorgesehene, die Federzungenaufnahmen in Richtung auf den Schichtaufbau überragende Anlageflächen zugeordnet sind, an denen die Federzungen zur Vorspannung des Schichtaufbaus anliegt.

Gegenüber dem Vorschlag nach EP 2 298 582 A1 kann mit der vorliegenden Erfindung auf ein zusätzliches Federgegenelement verzichtet werden, welches in das Gehäuse eingelegt wird. Dadurch kann die Zahl der Komponenten zur Herstellung der elektrischen Heizvorrichtung reduziert werden. Die Herstellungskosten sind verringert. Auch bestehen weniger Möglichkeiten einer fehlerhaften Montage durch Vertauschen oder fehlerhaften Einbau von Komponenten der Heizvorrichtung.

Bei der erfindungsgemäßen elektrischen Heizvorrichtung ragen die Anlageflächen in Richtung auf den Schichtaufbau vor und überragen die Federzungenaufnahmen. Das Federelement befindet sich sowohl in einer Montageausgangslage, in welcher die Federzungen noch im Wesentlichen ungespannt sind, und in einer Montagelage, bei welcher das Federelement den Schichtaufbau unter Vorspannung setzt, zwischen den Anlageflächen und dem Schichtaufbau. Die Federzungenaufnahmen und die Anlageflächen werden durch das Gehäuse ausgebildet. Diese Funktionsbereiche des Gehäuses sind üblicherweise einteilig an einem Längsholm des rahmenförmigen Gehäuses ausgeformt.

Das Gehäuse kann bevorzugt aus identisch geformten Gehäuseteilen ausgebildet sein, die miteinander verrastet sind. Diese Gehäuseteile sind üblicherweise als Schalenelemente ausgebildet und werden in einer Richtung quer zu den Haupterstreckungsrichtungen des Schichtaufbaus aufeinander zu bewegt, um das Gehäuse zu fügen. Das den Schichtaufbau einschließende und haltende Gehäuse besteht bevorzugt allein aus diesen beiden Gehäuseteilen. Vor dem Verrasten der beiden Gehäuseteile wird der Schichtaufbau zusammen mit dem Federelement montiert. Dabei wird üblicherweise zunächst das Federelement in das Gehäuseteil so eingesetzt, dass die Federzungen des Federelementes in den Federzungenaufnahmen des Gehäuses ausgenommen sind. In dieser Anordnung ist das Federelement maximal gegenüber dem Aufnahmeraum zur Aufnahme des Schichtaufbaus beabstandet. So kann der Schichtaufbau spannungsfrei in das Gehäuseteil eingesetzt werden. Danach wird üblicherweise das andere Gehäuseteil aufgesetzt, um das rahmenförmige Gehäuse zu schließen. Dieses Schließen des Gehäuses erfolgt vorspannungsfrei.

Erst danach wird durch Verschieben des Federelementes in einer im Wesentlichen aus EP 2 298 582 A1 bekannten Weise das Federelement gespannt und dabei der Schichtaufbau unter Vorspannung gesetzt. So liegen die einzelnen Lagen des Schichtaufbaus mit guter Wärmeleitfähigkeit gegeneinander an. Auch wird eine gute elektrische Kontaktierung zumindest der Strom führenden Bahnen des wenigstens einen PTC-Heizelementes ermöglicht. Elektrische Übergangswiderstände sind danach gering. Die elektrische Heizvorrichtung kann mit hohem Wirkungsgrad und ohne die Gefahr einer Überhitzung betrieben werden, auch wenn die elektrische Heizvorrichtung mit einer Netzspannung von 12 Volt betrieben wird.

Das Gehäuse besteht bevorzugt aus Kunststoff oder einem anderen isolierenden Werkstoff, wie beispielsweise Keramik.

Bei einer Ausgestaltung des Gehäuses aus Kunststoff hat das Gehäuse bevorzugt Längsholme, die sich parallel zu den Lagen des Schichtaufbaus erstrecken. Zumindest ein Längsholm des Kunststoffrahmens bildet die Federzungenaufnahmen und die parallel hierzu vorgesehenen Anlageflächen aus. Es versteht sich, dass die elektrische Heizvorrichtung zwei längliche Federelemente aufweisen kann, die jeweils an gegenüberliegenden Längsseiten des Schichtaufbaus an diesem anliegen.

Die Federzungenaufnahmen und die benachbart hierzu vorgesehenen Anlageflächen sind bevorzugt nach Art eines gleichförmigen Musters an einer Innenseite eines Längsholmes des Kunststoffrahmens vorgesehen. In entsprechender Weise ragen in vorbestimmten Abständen Federzungen von dem Federelement ab. Die Federzungen ragen auf der gegenüberliegenden Seite von einer Ebene ab, aus welcher die Federzungen bevorzugt durch Stanzen und Biegen ausgebildet sind. Mit seiner den Federzungen gegenüberliegenden Außenfläche liegt das Federelement bevorzugt unmittelbar an einem metallischen wärmeabgebenden Element an. So wir die Verschiebebewegung des Federelementes beim Verspannen des Schichtaufbaus über die metallische Außenfläche des Schichtaufbaus geführt. Die Außenfläche des metallischen wärmeabgebenden Elementes kann dabei durch die Enden eines meandrierend gebogenen Blechstreifens gebildet sein. Mit Blick auf eine möglichst gleichmäßige Abstützung des Federelementes ist es zu bevorzugen das äußere wärmeabgebende Element des Schichtaufbaus an seiner Außenseite mit einem Blechband zu versehen, das sich parallel zu den Lagen des Schichtaufbaus erstreckt und welches fest mit dem äußeren wärmeabgebenden Element verbunden ist. Das entsprechende Blechband wird bevorzugt durch Umbördeln oder eine andere Art der Befestigung unmittelbar mit dem zugeordneten wärmeabgebenden Element verbunden. Alternativ oder ergänzend können Lagen des Schichtaufbaus einschließlich des Blechbandes auch unverschieblich jeweils für sich in dem Gehäuse und von dem Gehäuse gehalten sein. Eine Verschiebebewegung des Federelementes führt danach zu keiner verschiebenden Bewegung einzelner Lagen des Schichtaufbaus beim Verschieben des Federelementes.

Das besagte, an der Außenseite des äußeren wärmeabgebenden Elementes anliegende Blechband ist bevorzugt längs und quer zu den Lagen des Schichtaufbaus mit einer ebenen Außenfläche versehen. An diese ebene Außenfläche liegt das Federelement flächig an. Über diese beiden Kontaktflächen erfolgt die Führung des Federelementes beim Verschieben desselben.

In an sich bekannter Weise hat das Gehäuse zwei, jeweils einer Öffnung für das zu erwärmende Medium bildende Gehäuseteil und ist dadurch "offen". Zumindest eines dieser Gehäuseteile ist bevorzugt zum Einlegen des Schichtaufbaus und des Federelementes angepasst ausgebildet. So können die Lagen des Schichtaufbaus und das Federelement in dem einen Gehäuseteil vormontiert werden. Das entsprechende Gehäuseteil kann als Gehäuseschalenelement ausgebildet sein und ein den Aufnahmeraum für den Schichtaufbau definierenden Raum im Grunde vollständig ausbilden. Das andere Gehäuseteil ist bei dieser Fallgestaltung lediglich als flacher Gehäusedeckel ausgebildet, der auf das schalenförmige Gehäuseteil aufgesetzt wird. Alternativ können beide Gehäuseteile auch Teile des Aufnahmeraums zur Aufnahme des Schichtaufbaus und des Federelementes ausbilden. In einem solchen Fall bilden beide Gehäuseteile üblicherweise die Federzungenaufnahmen und die benachbart hierzu vorgesehenen Anlageflächen aus, so dass sich das Federelement im Grund über die gesamte Höhenerstreckung des Gehäuses an diesem abstützt. Als Höhenerstreckung sei dabei die Durchtrittsrichtung des zu erwärmenden Mediums durch die elektrische Heizvorrichtung zu verstehen, die in der Regel rechtwinklig zu der Öffnung für das zu erwärmende Medium verläuft und normal zu Außenflächen des Gehäuses verläuft, die diese Öffnung jeweils ausbilden.

Das durch die Gehäuseteile gebildete Gehäuse begrenzt zwischen seinen Außenflächen in Durchtrittsrichtung des zu erwärmenden Mediums bevorzugt die Federzungenaufnahmen. Dementsprechend liegen die Federzungenaufnahmen hinter der Außenfläche und sind von dieser abgedeckt. Hierdurch ist das Federelement unverlierbar in dem Gehäuse gehalten. Auch wird verhindert, dass zu erwärmende Luft zwar durch das Gehäuse, allerdings nicht durch den die Luft erwärmenden Schichtaufbau, hindurchgeführt wird. So kann ein Bypassstrom von kalter Luft durch das Gehäuse vermieden werden.

Mit Blick auf eine möglichst gleichmäßige Verspannung des Schichtaufbaus in dem Gehäuse hat das Federelement bevorzugt mehrere parallele Reihen von Federzungen, denen parallele Reihen von Federzungenaufnahmen und benachbart hierzu vorgesehene Anleiheflächen zugeordnet sind. Auch hierdurch kann eine gleichmäßige Verspannung des Schichtaufbaus in Höhenrichtung erreicht werden. Es versteht sich, dass die Federzungen bevorzugt über die gesamte Länge des Schichtaufbaus vorgesehen sind, so dass dieser über seine gesamte Längserstreckung gleichmäßig vorgespannt in dem Gehäuse gehalten ist.

In an sich aus EP 2 298 582 bekannter Weise der Federzungen zwischen ihrem freien durch Stanzen und Biegen ausgebildeten Ende und der Ebene des Federblechs, aus dem die Federzungen durch Stanzen und Biegen herausgebogen sind, jeweils Auflauframpen aus. Alternativ oder kumulativ kann zwischen den Federzungenaufnahmen und den zugeordneten Anlageflächen durch das Gehäuse jeweils eine Rampenfläche gebildet sein. Die Auflauframpen stoßen beim Verschieben des Federelementes gegen die Ränder der Federzungenaufnahmen, so dass das Federelement in der Richtung auf den Schichtaufbau herausgehoben und gegen diesen angelegt und schließlich bei an den Anlageflächen anliegenden Federzungen unter Vorspannung dagegen gedrückt ist. Aufgrund dessen wird beim Verschieben des Federelementes von der Montageausgangslage, in welcher sich die Federzungen in den Federzungenaufnahmen befinden, in eine Montageendlage, in welcher die Federzungen vorgespannt gegen die Anlageflächen anliegen, eine gleichförmige Federvorspannung bewirkt. Entsprechendes gilt für die bevorzugt vorgesehenen Rampenflächen, die durch das Gehäuse ausgebildet sind. Diese Rampenflächen sind bevorzugt als Schrägflächen zwischen dem Grund der Federzungenaufnahme und der Anlagefläche ausgebildet. So begrenzen die Rampenflächen die Federzungenaufnahme einseitig. Die gegenüberliegende Begrenzungswand der Federzungenaufnahme kann sich rechtwinklig von dem Grund erheben und damit rechtwinklig zu den Lagen des Schichtaufbaus erstreckend ausgeformt sein. Mit dieser Ausbildung werden die Schrägflächen zum Anheben des Federelementes durch das Federelement selbst ausgebildet. So können die Federzungenaufnahmen und die Anlageflächen des Gehäuses mit orthogonal zueinander ausgerichteten Flächen vorgesehen sein.

Gemäß einer weiteren bevorzugten Ausgestaltung der vorliegenden Erfindung hat das Gehäuse einen Anschlag für das in eine Montageendlage geschobene Federelement. So wird verhindert, dass das Federelement über die Montageendlage hinaus verschoben wird. Die Länge des Federelementes ist so auf die Abmessungen des Gehäuses bzw. die Lage des Anschlages abgestimmt, dass das Federelement lediglich bis in die Montageendlage, nicht aber darüber hinaus verschoben werden kann. So kann die einzelne Federzunge jeweils lediglich ausgehend von der Aufnahme in der Federzungenaufnahme bis auf die benachbarte Anlagefläche verschoben werden und nicht in die nächstfolgende Federzungenaufnahme weitergleiten. Gemäß einer bevorzugten Weiterbildung der vorliegenden Erfindung hat das Federelement einen Widerhaken, durch dessen Zusammenwirken mit dem Gehäuse ein ungewolltes Verschieben des Federelementes entgegen der Verschieberichtung in die Montageendlage verhindert wird. Dieser Widerhaken ist üblicherweise durch Stanzen und Biegen aus der Ebene des Blechstreifens herausgebogen, der das Federelement ausformt.

Weitere Einzelheiten und Vorteile der vorliegenden Erfindung ergeben sich aus der folgenden Beschreibung eines Ausführungsbeispiels in Verbindung mit der Zeichnung. In dieser Zeichnung zeigen:
- Fig. 1: eine Seitenansicht des Ausführungsbeispiels der elektrischen Heizvorrichtung;
- Fig. 2: eine Draufsicht des Ausführungsbeispiels;
- Fig. 3: eine Schnittansicht entlang der Linie III-III in Fig. 2;
- Fig. 4: eine vergrößerte Detailansicht der Schnittdarstellung gemäß Fig. 3;
- Fig. 5: eine Schnittansicht entlang der Linie V-V gemäß Fig. 1;
- Fig. 6: eine Schnittansicht entlang der Linie VI-VI gemäß Fig. 1; und
- Fig. 7: eine perspektivische Draufsicht auf das Federelement des Ausführungsbeispiels.

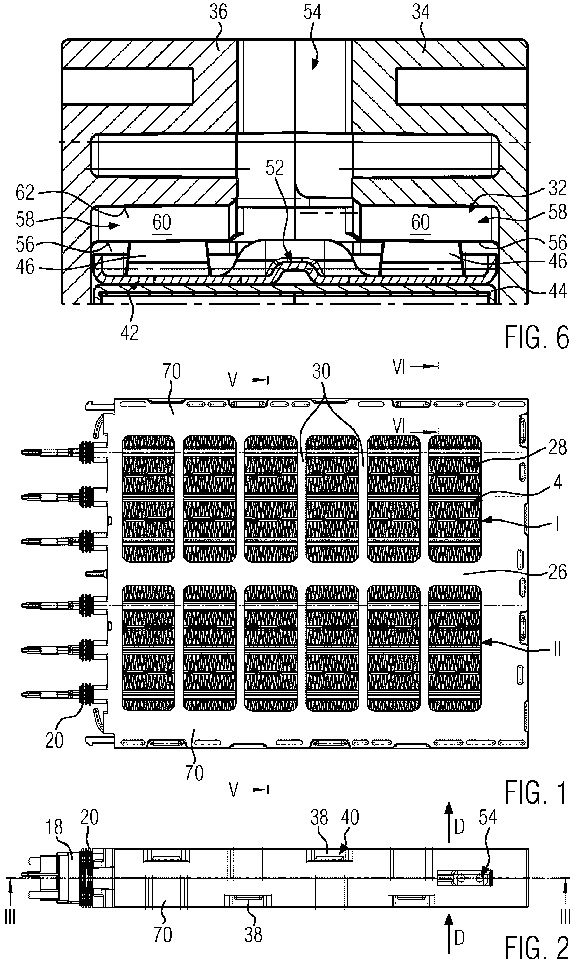

Die Figuren 1 bis 3 lassen den Gesamtaufbau der elektrischen Heizvorrichtung erkennen. Diese hat ein Gehäuse 2, in dem ein Schichtaufbau 4 zur Erzeugung von Wärme angeordnet ist. Dieser Schichtaufbau 4 ist in dem Gehäuse 2 aufgenommen und eingeschlossen.

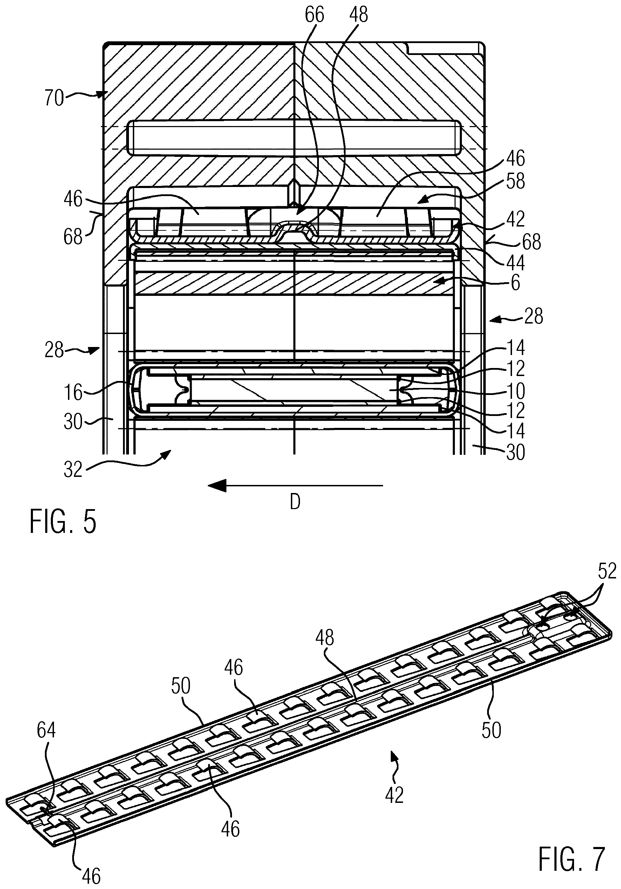

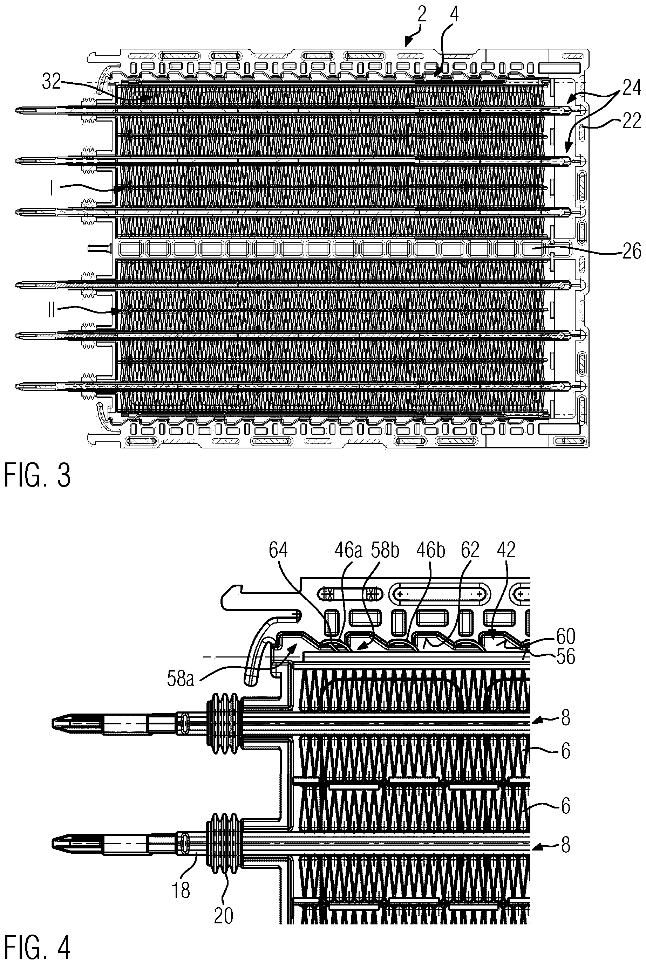

Der Schichtaufbau 4 umfasst Radiatorelemente 6, die als Wellrippenelemente aus mäandrierend gebogenen Blechstreifen gebildet sind, und mehrere wärmeerzeugende Elemente 8 mit wenigstens einen PTC-Element 10, welches in an sich bekannter Weise an sich parallel erstreckenden Kontaktblechen 12 anliegt. Wie insbesondere Fig. 5 zu entnehmen ist, umfasst das wärmeerzeugende Element 8 ferner außenseitig gegen die Kontaktbleche 12 angelegte Isolationslagen aus einem elektrisch isolierenden Material, die mit Bezugszeichen 14 gekennzeichnet sind und gegen die Innenseite eines umfänglich geschlossenen Blechrohres 16 anliegen, welches die Komponenten des wärmeerzeugenden Elementes 8 zu einer Einheit fügt und gegenüber einer unmittelbaren Kontaktierung dieser Elemente mit der zu erwärmenden Luft schützt. Das Blechrohr 16 ist aufgrund der Isolationslagen 14 potentialfrei. So sind auch die Radiatorelemente 6 potentialfrei. Jedes Blechrohr 16 hat eine Anschlussseite, die in Fig. 3 links dargestellt ist und an welcher die einzelnen Kontaktbleche 12 für sich oder aufgrund einer Verlängerung durch separate Kontaktzungenelemente zum elektrischen Anschluss freiliegen. Die Kontaktbleche 12 durchragen dabei durch das Gehäuse 2 gebildete Stutzen 18, die endseitig mit elastomeren Dichtelementen 20 versehen sind, um das gezeigte Ausführungsbeispiel dichtend in einen Anschlussflansch einzusetzen. Dieser Anschlussflansch kann beispielsweise die freiliegenden Kontaktelemente zu den einzelnen wärmeerzeugenden Elementen 8 nach Art eines Steckers halten. Der Flansch kann aber auch der Boden eines Steuergehäuses sein, der nicht nur die einzelnen wärmeerzeugenden Elemente 8 elektrisch anschließt, sondern darüber hinaus auch Steuerkomponenten einer beispielsweise elektronischen Steuerung einschließen kann. Jedenfalls wird aufgrund der Dichtelemente 20 verhindert, dass das zu erwärmende Fluid bis an die freiliegenden Kontaktflächen zu den wärmeerzeugenden Elementen 8 in Fig. 4 links von den Dichtelementen 20 gelangt.

Auf der gegenüberliegenden Seite sind die Blechrohre 16 endseitig in einem Querholm 22 des Gehäuses 2 aufgenommen, der hierzu angepasste Blechrohraufnahmen 24 aufweist, in denen die Blechrohre 16 mit ihren Enden abgedichtet aufgenommen sind. Wie weiterhin die Fig. 1 und 3 in der Gesamtschau vermitteln, bildet das Gehäuse 2 zwei Gefache I, II aus, in denen jeweils ein eigenständiger Schichtaufbau 4 aufgenommen ist. Die beiden Schichtaufbauten 4 sind identisch ausgebildet. Die Gefache I, II werden durch eine mittlere Trennwand 26 voneinander getrennt.

Das Gehäuse 2 bildet an gegenüberliegenden Hauptflächen jeweils Öffnungen 28 für den Einbzw. Austritt der zu erwärmenden Luft aus, die in Richtung D fließt, vgl. Fig. 3. Diese Öffnungen 28 sind durch Querstege 30 durchsetzt, die einen durch das Gehäuse 2 ausgebildeten Aufnahmeraum 32 für den Schichtaufbau 4 außenseitig begrenzen.

Wie insbesondere die Fig. 1, 2, 5 und 6 erkennen lassen, wird das Gehäuse 2 durch zwei Gehäuseteile 34, 36 ausgebildet, die jeweils identisch sind. Die Gehäuseteile 34, 36 weisen einander zugeordnete Rastzungen und Rastöffnungen auf, die in Fig. 2 angedeutet und mit Bezugszeichen 38 bzw. 40 gekennzeichnet sind. Diese Rastelemente 38, 40 dienen der Verriegelung der beiden Gehäuseteile 34, 36 unter Einschluss des Schichtaufbaus 4.

Als weiteres Element des Schichtaufbaus 4 verdeutlichen die Fig. 5 und 6 ein mit Bezugszeichen 42 gekennzeichnetes Federelement. Dieses Federelement 42 liegt an einem Blech an, welches als umbördeltes Blechband fest mit dem äußeren Radiatorelement 6 verbunden und in Fig. 5 mit Bezugszeichen 44 gekennzeichnet ist. Die Befestigung zwischen dem umbördelten Blechband 44 und dem Radiatorelement 6 erfolgt durch Umbördeln der in Fig. 5 erkennbaren und das Radiatorelement 6 umgreifenden Ränder des Blechbandes 44.

Wie insbesondere Fig. 7 verdeutlicht, hat das Federelement 42 zwei parallele Reihen von in gleichmäßigen Abständen von dem Federelement 42 abragenden Federzungen 46. Die Federzungen 46 sind nach außen konvex gekrümmt und bilden dementsprechend konvexe Rampenflächen aus. Zwischen diesen parallelen Reihen ist das das Federelement 42 ausbildende und zunächst ebene Blechmaterial mit einer aus der Ebene des Blechmaterials in Richtung auf die Federzungen 46 vorspringenden Versteifungsrippe 48 versehen. Das Blechmaterial ist mit einem umlaufenden U-förmigen Rand 50 versehen, der aus der Ebene des Blechmaterials in Richtung auf die Federzungen 46 umbogen ist. Auch durch diesen umlaufenden Rand 50 werden sich in Längsrichtung des Federelementes 42 erstreckende Versteifungsrippen gebildet. An der mit dem Rand 50 versehenen Stirnseite, die durch den Rand 50 ebenfalls versteift ist, befindet sich auf Höhe der Versteifungsrippe 48 eine Erhebung mit zwei Eingriffsöffnungen 52, die - wie Fig. 6 vermittelt - von außen durch das Gehäuse 2 hindurch erreicht werden können. Hierzu hat das Gehäuse 2 eine Werkzeugöffnung 54, die in den Fig. 2 und 6 erkennbar ist.

Die Aufnahme des zuvor beschriebenen Federelementes 42 in dem Gehäuse 2 ergibt sich insbesondere aus den Fig. 4 und 5. In diesen Figuren ist das Federelement 42 in seiner Montageendlage wiedergegeben, in welcher die Federzungen 46 an einer Anlagefläche 56 anliegen. Diese Anlagefläche 56 ist durch das Gehäuse 2 selbst gebildet. Die Anlagefläche 56 ist einteilig an dem Gehäuse 2 ausgeformt. Der Anlagefläche 56 zugeordnet ist jeweils in Fig. 4 links davon eine Federzungenaufnahme 58 ausgespart, die über eine Rampenfläche 60 in die zugeordnete Anlagefläche 56 übergeht. Dabei springt die Anlagefläche 56 von einem Grund 62 der Federzungenaufnahme 58 in Richtung auf den Schichtaufbau 4 vor. Ein in den Fig. 7 und 4 mit Bezugszeichen 64 gekennzeichneter Widerhaken ist ähnlich wie die Federzungen 46 durch Stanzen und Biegen aus dem das Federelement 42 ausbildenden Blechmaterial geformt. Allerdings geht der Widerhaken 64 gradlinig von der Ebene des ursprünglichen Blechmaterials ab. In der in Fig. 4 gezeigten Montageendlage verkrallt der Widerhaken 64 gegen das Gehäuse 2.

Wie Fig. 5 vermittelt, sind zu den parallelen Reihen von Federzungen 46 parallele Reihen von einander zugeordneten Federzungenaufnahmen 58, Rampenflächen 60 und Anlageflächen 56 zugeordnet. Zwischen diesen parallelen Reihen bildet das Gehäuse eine tunnelförmige Aufnahme 66 für die mittlere Versteifungsrippe 48 aus. In dieser tunnelförmigen Aufnahme 66 befindet sich die Versteifungsrippe 48 zumindest in einer Montageausgangslage, die graphisch nicht dargestellt, aber nachfolgend erläutert werden wird. In dieser Montageausgangslage ist das Federelement gegenüber der in Fig. 4 gezeigten Position nach links verschoben, so dass die von links erste Federzunge 46a in der ihre zugeordneten Federzungenaufnahme 58a vorgesehen ist. Auch der Widerhaken 46 befindet sich innerhalb der Federzungenaufnahme 58a. Der Schichtaufbau 4 ist in dieser Montageausgangslage im Grunde spannungsfrei in dem Gefach des Gehäuses 2 aufgenommen. So kann beispielsweise ein Gehäuseteil zunächst mit sämtlichen Elementen des Schichtaufbaus bestückt werden. Wie die Fig. 5 und 6 erkennen lassen, bilden die beiden Gehäuseteile 34, 36 zwischen ihren jeweiligen Außenflächen 68 in Durchtrittsrichtung D des zu erwärmenden Mediums durchgehende Federzungenaufnahmen 58 aus. Diese Federzungenaufnahmen 58 sind in Durchtrittsrichtung durch die Außenflächen 68 begrenzt. Die Öffnungen 28 lassen lediglich die Elemente des Schichtaufbaus 4 frei, die der Wärmeerzeugung und der Abgabe der erzeugten Wärme an das zu erwärmende Fluid dienen. Die Federelemente 42 sind innerhalb des Gehäuses 2 gekapselt.

Von dieser zuvor beschriebenen Montageausgangslage wird das Federelement 42 durch ein Werkzeug, welches durch die Werkzeugöffnung 54 eingreift und Stifte für die beiden Eingriffsöffnungen 52 hat - in Blickrichtung der Fig. 3 und 4 - von links nach rechts geschoben. Dabei gleiten die Federzungen 46 zunächst an den Rampenflächen 60 ab, so dass das Federelement 42 in Richtung auf den Schichtaufbau 4 angehoben wird. Nachdem sämtliche Setzbeträge des Schichtaufbaus 4 innerhalb des Gefaches erschöpft sind, erfolgt ein weiteres Verschieben unter erheblicher elastischer Vorspannung der Federzungen 46, die den Schichtaufbau 4 innerhalb des Gehäuses 2 vorspannen. Schließlich stößt das Federelement 42 gegen eine in Fig. 3 rechts zu verortende Anschlagfläche, die durch das Gehäuse 2 ausgebildet wird, so dass die Verschiebebewegung in Richtung auf die Montageendlage beendet ist. Im Rahmen der Verschiebebewegung wurde der Widerhaken 64 ebenfalls aus der zugeordneten Federzungenaufnahme 58 herausgehoben und hat sich gegen die Anlagefläche 56 verkrallt. Der Widerhaken 64 liegt in Querrichtung des länglichen Federelementes 42 zwischen den beiden ersten Federzungen 46a. In der Montageendlage ist das Federelement 42 form- und/oder kraftschlüssig in Verschieberichtung fest positioniert. Üblicherweise krallt sich der Widerhaken 64 in die Anlagefläche 56, so dass eine formschlüssige Sicherung des Federelementes 42 in der Montageendlage verwirklicht ist. Die in der Montageendlage erzeugte Vorspannung des Schichtaufbaus 4 ist dementsprechend dauerhaft gesichert und kann auch bei Vibrationen, die in einem Kraftfahrzeug üblich sind, nicht gelöst werden. Denn die vorliegende Erfindung betrifft insbesondere eine Zusatzheizung für ein Kraftfahrzeug.

Aufgrund der Kapselung der PTC-Elemente 10 innerhalb des Blechrohres 16 kann das gezeigte Ausführungsbeispiel auch als Hochvolt-Heizer zum Einsatz kommen und mit Betriebsspannungen von deutlich über 12 V betrieben werden.

Gegenüber dem Stand der Technik gemäß EP 2 298 582 A1 ergibt sich der Vorteil eines vereinfachten Aufbaus, da lediglich zumindest ein Federelement 42 verschieblich in dem Gehäuse zwei aufgenommen ist und auf ein Federgegenelement gemäß dem Vorschlag nach EP 2 298 582 A1 verzichtet werden kann. Vielmehr werden bei der vorliegenden Erfindung die Gegenflächen zu dem Federelement 42 durch das Gehäuse 2 selbst, bevorzugt durch einteilig an dem Gehäuse 2 vorgesehene Flächen 58, 60, 62 gebildet. Ersichtlich hat das Ausführungsbeispiel 2 Federelemente, die jeweils einem Längsholm 70 des Gehäuses 2 zugeordnet sind, wobei sich die Längsholme 70 jeweils parallel zu den Lagen des Schichtaufbaus 4 und zu der Erstreckungsrichtung des Federelementes 42 erstrecken. So bewirkt die durch das Federelement 42 aufgebrachte Kraft gegen sämtliche Lagen des Schichtaufbaus 4 und verspannt diese mit guter Wärmeleitfähigkeit gegeneinander. Auch kann die äußere Federkraft die elektrisch miteinander zu kontaktierenden Elemente 10, 12 gegeneinander unter Vorspannung anlegen und so eine zuverlässige Stromeinleitung an der Grenzfläche gewährleisten.

### Bezugszeichenliste

- 2: Gehäuse
- 4: Schichtaufbau
- 6: Radiatorelement
- 8: wärmeerzeugendes Element
- 10: PTC-Element
- 12: Kontaktblech
- 14: Isolationslage
- 16: Blechrohr
- 18: Stutzen
- 20: Dichtelement
- 22: Querholm
- 24: Blechrohraufnahme
- 26: Trennwand
- 28: Öffnung
- 30: Quersteg
- 32: Aufnahmeraum
- 34: Gehäuseteil
- 36: Gehäuseteil
- 38: Rastzunge
- 40: Rastöffnung
- 42: Federelement
- 44: umbördeltes Blechband
- 46: Federzunge
- 48: Versteifungsrippe
- 50: Rand
- 52: Eingriffsöffnung
- 54: Werkzeugöffnung
- 56: Anlagefläche
- 58: Federzungenaufnahme
- 60: Rampenfläche
- 62: Grund
- 64: Widerhaken
- 66: tunnelförmige Aufnahme
- 68: Außenfläche
- 70: Längsholm
- I, II: Gefach des Gehäuses
- D: Luftdurchtrittsrichtung

## Patentansprüche

1. Elektrische Heizvorrichtung, insbesondere als Zusatzheizung für Kraftfahrzeuge, mit einem offenen Gehäuse (2), in dem ein Schichtaufbau (4) mit wenigstens einem Radiatorelement (6), wenigstens einem wärmeerzeugenden Element (8) mit wenigstens einem PTC-Element (10) und wenigstens ein den Schichtaufbau (4) unter Vorspannung haltendes Federelement (42) aufgenommen ist,
**dadurch gekennzeichnet,**
**dass** das Federelement (42) verschieblich in dem Gehäuse (2) aufgenommen ist und mehrere in Verschieberichtung versetzt zueinander vorgesehene Federzungen (46) aufweist, denen durch das Gehäuse (2) ausgebildete Federzungenaufnahmen (58) und benachbart hierzu vorgesehene, die Federzungenaufnahmen (58) in Richtung auf den Schichtaufbau (4) überragende Anlagenflächen (56) zugeordnet sind, an denen die Federzungen (46) zur Vorspannung des Schichtaufbau (4) anliegen.

2. Elektrische Heizvorrichtung nach Anspruch 1, **dadurch gekennzeichnet, dass** das Gehäuse (2) als Kunststoffrahmen mit Längsholmen (70) ausgebildet ist, die sich parallel zu den Lagen des Schichtaufbau (4) erstrecken und von denen zumindest einer die Federzungenaufnahmen (58) und die benachbart hierzu vorgesehenen Anlagenflächen (56) ausbildet.

3. Elektrische Heizvorrichtung nach Anspruch 1 oder 2, **dadurch gekennzeichnet, dass** das Federelement (42) unmittelbar gegen eine Außenfläche eines metallischen Radiatorelementes (6) anliegt.

4. Elektrische Heizvorrichtung nach einem der vorherigen Ansprüche, **dadurch gekennzeichnet, dass** ein äußeres Radiatorelement (6) an seiner Außenseite ein sich parallel zu den Lagen des Schichtaufbau (4) erstreckendes Blechband (44) aufweist, welches fest mit dem äußeren Radiatorelement (6) verbunden ist und gegen dessen Außenfläche das Federelement (42) unmittelbar gleitverschieblich anliegt.

5. Elektrische Heizvorrichtung nach Anspruch 4, **dadurch gekennzeichnet, dass** das Blechband (44) eine längs und quer den Lagen des Schichtaufbaus (4) eben ausgebildete Außenfläche hat.

6. Elektrische Heizvorrichtung nach einem der vorherigen Ansprüche, **dadurch gekennzeichnet, dass** das offene Gehäuse (2) zwei jeweils eine Öffnung (28) für das zu erwärmende Medium ausbildende Gehäuseteile (34; 36) umfasst und dass die beiden Gehäuseteile (34; 36) zwischen ihren Außenflächen (56) in Durchtrittrichtung (D) des zu erwärmenden Mediums durchgehende Federzungenaufnahmen (58) begrenzen.

7. Elektrische Heizvorrichtung nach einem der vorherigen Ansprüche, **dadurch gekennzeichnet, dass** das Federelement (42) mehrere parallele Reihen von Federzungen (46) aufweist, denen parallele Reihen von Federzungenaufnahmen (58) und benachbart hierzu vorgesehene Anlagenflächen (56) zugeordnet sind.

8. Elektrische Heizvorrichtung nach einem der vorherigen Ansprüche, **dadurch gekennzeichnet, dass** das Gehäuse (2) einen Anschlag für das in eine Montageendlage geschobene Federelement (42) ausbildet.

9. Elektrische Heizvorrichtung nach einem der vorherigen Ansprüche, **dadurch gekennzeichnet, dass** das Federelement (42) einen Widerhaken (64) ausformt, durch dessen Zusammenwirken mit dem Gehäuse (2) eine ungewollte Verschiebung des Federelementes (42) entgegen der Verschieberichtung in die Montageendlage verhindert wird.

10. Elektrische Heizvorrichtung nach einem der vorherigen Ansprüche, **dadurch gekennzeichnet, dass** das Federelement (42) zumindest eine sich in Verschieberichtung erstreckende Versteifungsrippe (48) aufweist.

## Claims

1. Electrical heating device, in particular as a supplementary heater for motor vehicles, with an open housing (2) in which a layered structure (4) with at least one radiator element (6), at least one heat-generating element (8) with at least one PTC element (10) and at least one spring element (42) holding the layered structure (4) in a pre-biased manner is accommodated,
**characterized in that**
the spring element (42) is accommodated displaceably in the housing (2) and has a plurality of spring tabs (46) which are offset with respect to one another in the direction of displacement and with which spring tab accommodations (58) formed by the housing (2) and bearing surfaces (56) provided adjacent thereto and projecting above the spring tab accommodations (58) in the direction of the layered structure (4) are associated, the spring tabs (46) bearing against said bearing surfaces for pre-biasing the layered structure (4).

2. Electrical heating device according to claim 1, **characterized in that** the housing (2) is designed as a plastic frame with longitudinal spars (70) which extend parallel to the layers of the layered structure (4) and of which at least one forms the spring tab accommodations (58) and contact surfaces (56) provided adjacent thereto.

3. Electrical heating device according to claim 1 or 2, **characterized in that** the spring element (42) bears directly against an outer surface of a metallic radiator element (6).

4. Electrical heating device according to one of the previous claims, **characterized in that** an outer radiator element (6) has on its outer side a sheet metal strip (44) extending parallel to the layers of the layered structure (4), which is firmly connected to the outer radiator element (6) and against the outer surface of which the spring element (42) directly slidably engages.

5. Electrical heating device according to claim 4, **characterized in that** the sheet metal strip (44) has an outer surface which is flat along and across the layers of the layered structure (4).

6. Electrical heating device according to one of the previous claims, **characterized in that** the open housing (2) comprises two housing parts (34; 36) each forming an opening (28) for the medium to be heated and that the two housing parts (34; 36) define between their outer surfaces (56) continuous spring tab accommodations (58) in the passage direction (D) of the medium to be heated.

7. Electrical heating device according to one of the previous claims, **characterized in that** the spring element (42) has several parallel rows of spring tabs (46), to which parallel rows of spring tab accommodations (58) and bearing surfaces (56) provided adjacent thereto are assigned.

8. Electrical heating device according to one of the previous claims, **characterized in that** the housing (2) forms a stop for the spring element (42) pushed into an assembly end position.

9. Electrical heating device according to one of the previous claims, **characterized in that** the spring element (42) forms a barb (64), by the cooperation of which with the housing (2) an unintentional displacement of the spring element (42) contrary to the direction of displacement into the assembly end position is prevented.

10. Electric heating device according to one of the previous claims, **characterized in that** the spring element (42) has at least one stiffening rib (48) extending in the displacement direction.

## Revendications

1. Dispositif de chauffage électrique, en particulier comme chauffage d'appoint pour véhicules automobiles, avec un boîtier ouvert (2) dans lequel est logée une structure en couches (4) avec au moins un élément de radiateur (6), au moins un élément générateur de chaleur (8) avec au moins un élément CTP (10) et au moins un élément de ressort (42) qui maintient la structure en couches (4) sous précontrainte,
**caractérisé en ce que**
l'élément de ressort (42) est reçu de manière déplaçable dans le boîtier (2) et présente plusieurs lamelles de ressort (46) décalées les unes par rapport aux autres dans la direction de déplacement, auxquelles sont associés des logements de lamelles de ressort (58) formés par le boîtier (2) et des surfaces d'appui (56) adjacentes à ceux-ci et faisant saillie au-dessus des logements de lamelles de ressort (58) en direction de la structure en couches (4), les lamelles de ressort (46) s'appuyant contre ces surfaces d'appui pour pré-contraindre la structure en couches (4).

2. Dispositif de chauffage électrique selon la revendication 1, **caractérisé en ce que** le boîtier (2) est formé comme un cadre en matière plastique avec des longerons (70) qui s'étendent parallèlement aux couches de la structure en couches (4) et dont l'un au moins forme les logements de lamelles de ressort (58) et les surfaces de contact (56) prévues à côté de celles-ci.

3. Dispositif de chauffage électrique selon la revendication 1 ou 2, **caractérisé en ce que** l'élément de ressort (42) est directement en butée contre une surface extérieure d'un élément de radiateur métallique (6).

4. Dispositif de chauffage électrique selon l'une des revendications précédentes, **caractérisé en ce qu'**un élément de radiateur extérieur (6) présente sur sa face extérieure une bande de tôle (44) s'étendant parallèlement aux couches de la structure en couches (4), qui est fermement reliée à l'élément de radiateur extérieur (6) et contre la surface extérieure de laquelle l'élément de ressort (42) s'appuie directement de manière coulissante.

5. Dispositif de chauffage électrique selon la revendication 4, **caractérisé en ce que** la bande de tôle (44) présente une surface extérieure qui est plane le long et en travers des couches de la structure en couches (4).

6. Dispositif de chauffage électrique selon l'une des revendications précédentes, **caractérisé en ce que** le boîtier ouvert (2) comprend deux parties de boîtier (34 ; 36) formant chacune une ouverture (28) pour le milieu à chauffer et **en ce que** les deux parties de boîtier (34 ; 36) définissent entre leurs surfaces extérieures (56) des logements de lamelles de ressort (58) continues dans la direction de passage (D) du milieu à chauffer.

7. Dispositif de chauffage électrique selon l'une des revendications précédentes, **caractérisé en ce que** l'élément à ressort (42) présente plusieurs rangées parallèles de lamelles de ressort (46), auxquelles sont associées des rangées parallèles de logements de lamelles de ressort (58) et des surfaces de butée (56) prévues à côté de celles-ci.

8. Dispositif de chauffage électrique selon l'une des revendications précédentes, **caractérisé en ce que** le boîtier (2) forme une butée pour l'élément de ressort (42) poussé dans une position de montage finale.

9. Dispositif de chauffage électrique selon l'une des revendications précédentes, **caractérisé en ce que** l'élément de ressort (42) forme une barbe (64), par la coopération de laquelle avec le boîtier (2) un déplacement involontaire de l'élément de ressort (42) dans la direction contraire à la direction de déplacement vers la position de montage finale est empêché.

10. Dispositif de chauffage électrique selon l'une des revendications précédentes, **caractérisé en ce que** l'élément de ressort (42) présente au moins une nervure de renforcement (48) s'étendant dans la direction de déplacement.
